Europäisches Patentamt

(19) European Patent Office

Office européen des brevets

(11) Publication number: **0 003 402**

A1

(12) **EUROPEAN PATENT APPLICATION**

(21) Application number: **79300065.4**

(22) Date of filing: **16.01.79**

(51) Int. Cl.²: **B 32 B 15/08**
**B 65 D 87/18**

(30) Priority: **23.01.78 GB 267778**

(43) Date of publication of application:
**08.08.79 Bulletin 79/16**

(84) Designated contracting states:
**BE DE FR GB IT NL SE**

(71) Applicant: **The British Petroleum Company Limited**
**Britannic House Moor Lane**
**London EC2Y 9BU(GB)**

(72) Inventor: **Faulkner, Philip George**
**BP Research Centre Chertsey Road**
**Sunbury-on-Thames Middlesex TW16 7LN(GB)**

(72) Inventor: **Humphris, Colin James**
**BP Research Centre Chertsey Road**
**Sunbury-on-Thames Middlesex RW16 7LN(GB)**

(72) Inventor: **Lainchbury, David Lindsay Guy**
**Devonshire House Piccadilly**
**London W1X 6AY(GB)**

(74) Representative: **Harry, John et al,**
**BP TRADING LIMITED Patents & Licensing Division**
**Chertsey Road**
**Sunbury-on-Thames Middlesex TW16 7LN(GB)**

(54) **Reinforced and earthed antistatic laminates for use as barriers against fluids ignitable by electrostatic discharge.**

(57) The present invention is an antistatic laminate which has at least one continuous layer of an electrically conductive material formed by a metal foil or a metallised surface of a polymer film, eg an aluminised polyester film and at least one layer of a non-conducting reinforcing scrim both layers being sandwiched between two layers of polymer film, and means for earthing the electrically conductive material.

The anti-static laminate may be disposed as a barrier within any container for storage or transportation of flammable fluids to divide the container into an air space and a liquid space.

These laminates are flexible, very light in weight and yet robust, and have the necessary antistatic properties to minimise the installation, economic and safety problems of conventional barriers. Their low permeability also minimises the unnecessary discharge of obnoxious vapours into the environment.

EP 0 003 402 A1

Croydon Printing Company Ltd.

0003402

**TITLE MODIFIED**
see front page

## ANTISTATIC LAMINATES FOR USE AS BARRIERS AGAINST FLUIDS IGNITABLE BY ELECTROSTATIC DISCHARGE

The present invention relates to antistatic laminates suitable for use as a protective barrier against flammable fluids.

Volatile liquids may be lost either during the filling of storage tanks or due to "breathing" caused by temperature variations. In designing storage tanks for flammable volatile liquids such as petroleum products, this loss poses three main problems, namely (a) environmental pollution, eg by products such as gasoline or petrol which contain hydrocarbons and additives such as tetraethyllead to improve their performance (b) the susceptibility of such fluids to ignition eg by static electrical discharge and (c) the economic implications of both the vapour loss and the tank design needed to minimise such loss.

Various methods have been used to overcome these problems including floating decks, vapour balancing systems and collapsible bag techniques, the latter being described in our US Patent No 4079856. Of these, the commercially viable collapsible bag has certain disadvantages arising from the materials from which it is made. Firstly, these materials if made sufficiently flexible tend not to be robust enough to withstand normal wear and tear during installation in a tank or in operation; however, if they are made thicker they become too heavy. Secondly, the movement of the bag in use may generate electrostatic charges which are also carried by the flammable liquid in the tank. Such storage tanks come in various shapes and sizes throughout the petroleum distribution system including ocean going vessels, refinery and depot storage, rail and road tankers, forecourt tanks for dispensing petrol or gasoline to automotive vehicles and the storage tanks in the vehicles themselves. Ideally, the bags should be flexible, robust, of the minimum weight possible, and antistatic for ease of installation in tanks of any design without the need for use of cumbersome, expensive or sophisticated equipment and to minimise the loading on the tank structure.

Polymer sheets, films and laminates produced hitherto for such uses have had desirable mechanical and barrier properties, but they also have a very high surface resistivity and high volume resistivity. This leads to the generation and accumulation of electrostatic charges which renders them unsuitable, and in some cases unsafe, particularly where they are to be used in environments where explosive gaseous mixtures may occur. Various techniques have hitherto been suggested to offset the hazards of electrostatic discharge in such environments. One method that has been suggested is to coat the base film with a conductive material but this is unsatisfactory because the coating tends to lift from the base film particularly when the conductive material is exposed to the liquid thus reducing the effectiveness of the system. To overcome this problem it has been suggested that such laminates be used in a manner whereby the conductive material is furthest from the liquid but this suffers from the same drawback if the coating lifts and separates from the polymer. Another suggested method is to incorporate conductive additives into the film during manufacture but these methods can result in a deterioration in mechanical properties and particularly in their ability to be joined by heat sealing.

It has now been found that some important electrical properties of such laminates may be improved to safe levels without substantially impairing their mechanical and physical properties and in many cases the mechanical properties will be improved.

Accordingly the present invention is an anti-static laminate comprising at least one continuous layer of an electrically conductive material formed by a metal foil or a metallised surface of a polymer film and at least one layer of a non-conducting reinforcing scrim both layers being sandwiched between two layers of polymer film, and means for earthing the electrically conductive material.

According to a further embodiment, the present invention also comprises a container provided with an anti-static laminate comprising at least one continuous layer of an electrically conductive material formed by a metal foil or a metallised surface of a polymer film and at least one layer of a non-conducting reinforcing scrim both layers being sandwiched between two layers of polymer film and means for earthing the electrically conductive material, the anti-static laminate being disposed within the container to divide the container into an air space and a liquid space.

The layer of electrically conductive material is either in the form of a metal foil or in the form of a metallised polymer. The latter may be produced by depositing a metal coating on the surface of a film of any of the well-known polymers having the desired mechanical and physical properties. Examples of polymers that may be used include polyesters, polyamides, polyurethanes, polyvinyl fluoride, polyvinyl chloride polyvinylidene chloride, polyethylene, fluorinated polyethylene, polypropylene, and the like. Films from some of these polymers may have to be previously treated to improve surface adhesion before using them in the laminate. Polyester or polyvinyl fluoride films are most preferred. The metal in the layer of electrically conducting material is suitably an oxidation resistant metal of high conductivity such as copper, aluminium, silver, gold, palladium or nickel. It is desirable that the thickness of the metal in the layer of electrically conducting material is as low as possible in order to minimise not only the total weight of the laminate per unit of area but also the risk of that layer cracking or fracturing on repeated flexion. Thus the thickness of the metal is suitably between 0.01 and 1 micron. It is preferred to use as the layer of electrically conductive material the aluminised surface of a polyester film.

The non-conductive scrim may be formed from any of the polymers referred to above in the context of the metallised polymer film or of cellulosic material. It is preferable to form the scrim from a petroleum resistant material such as polyester or polyvinyl fluoride. Since one of the functions of the scrim is to reinforce the laminate, it is preferable that the mesh of the scrim is not greater than 10 $cm^2$. Another function of the scrim is to provide delaminated areas on the laminate which allows access for maintaining electrical contact during jointing, mechanical welding or earthing. Provision for delamination may also be made on the polymer film adherent to the layer of conducting material by including at specific points during lamination release agents which may be non-adherent layers. Examples of such release agents include siliconised paper and sprayed polytetrafluroethylene.

In the anti-static laminate, the continuous layer of electrically conductive material and the scrim are sandwiched between two layers of polymer film, which may be formed from any of the polymers referred to above. Where the electrically conductive layer is formed by the metallised surface of a polymer film, one of the laminating polymer films is preferably the polymer film having the metallised surface. In this case this film is laminated to the second film with the metallised surface in between.

In the laminates of the present invention the electrically conductive material is provided with earthing means. This may simply be a strip of metallised polymer or a metal foil adhered by a conducting adhesive which enables the metal surface to be earthed. It is preferable that the earthing means does not pierce the polymer films on either side of the laminate because it may lead to ingress of air or flammable vapour within the lamination thus weaking the laminate. If the polymer films are pierced, the pierced area should preferably be sealed off with a piece of bonded film.

It is a feature of the antistatic laminate of the present invention that the earthing of the conductive material inside the laminate prevents discharge of electrostatic charges on the outer surface of the relatively non-conducting polymer film forming the laminate. This is surprising because the conducting surface is isolated from both the actual charge and the flammable vapour, which usually carries a residual charge, in spite of which it prevents transmission of the electrostatic charge or the build-up of such electrostatic charges.

The laminates of the present invention have the conductive material sandwiched between layers of polymer and this novel design prevents the conductive material from being lifted off the polymer due to continuous abrasion and contact between the polymer and the volatile liquid during transportation or storage. As added protection against accidental delamination when in use in a container, the laminate is preferably disposed within the container such that the layer of the polymer film furthest from the conductive material is adjacent the liquid space.

The bonding of the layers of the polymer film with the electrically conductive material and the non-conductive scrim may be carried out in any conventional manner. It is preferable to laminate the layers by heat to produce a fairly flexible, impermeable laminate. The laminating may be carried out either by impulse heat sealing or by ultrasonic sealing in order to produce a strong bond. Alternatively, the conductive layer may be bonded to the polymer film or scrim by using an adhesive compound, preferably one filled with conducting material such as carbon or metal powder. When using an adhesive for joining two laminates in order to fabricate structures it must be ensured that the electrical continuity is maintained across the weld. This may again be achieved by using an adhesive compound, filled with conducting material such as carbon or metal powder. These adhesive compounds filled with conducting materials

may also be used for reinforcing areas of the laminate subjected to maximum flexing and bending during use thus minimising the risk of break in electrical contact due to cracks or fractures on the metallised surface.

Welding and jointing of such laminates ensuring continuity of contact between the layers of conductive material may be achieved by cutting sections across the delaminated areas to expose the conductive material. Contact between the exposed materials from two laminates may then be established by conventional techniques using wires, foils or metal deposited polymers.

Such a facility of jointing and welding enables fabrication of laminated sheets of irregular shapes in which the edges of the sheets are non-parallel and yet retain continuity of contact between the conductive layers.

Alternatively, for simpler applications, the laminates may be produced using layers of conductive material having a greater surface area than the covering polymer films thus exposing the conductive material beyond the edges of the laminate.

The laminates of the present invention suitably have an overall thickness between 100 and 400 microns preferably between 100 and 200 microns. If measured at points where the strands of the scrim are not included, the thickness varies between 25 and 70 microns. To achieve this polymer films varying in thickness between 10 and 50 microns may be used. When used in a container for flammable liquids the polymer film of the laminate directly in contact with the liquid should preferably be thicker than the polymer film in contact with the airspace.

Laminates of the present invention are particularly useful for lining containers and as seals in storage tanks which transport flammable fluids. Typical examples of liquids and gases which are continuously being transported and are susceptible to ignition on exposure to electrostatic discharge are organic liquids particularly gasoline and benzene. They may also be used to produce plastic floating decks in such tanks, in gasoline transfer hoses, and to produce protective clothing and carpets.

The invention is further illustrated with reference to the following Examples.

Example 1

A laminate was made using the following components;

(i)     36 micron polyester film (Melinex S, Registered Trade Mark)

(ii)    Polyester scrim with a 10 $cm^2$ mesh

(iii)   12 micron aluminised polyester film (Melinex S, Registered Trade Mark) $/^-$aluminium thickness 0.03 microns$\_/$

The components were laminated using a polyester based polyurethane adhesive at 100°C with the aluminised surface of the polyester sandwiched within the laminate.

Example 2

A laminate was made as in Example 1 except that the laminating adhesive contained a carbon dispersion (Ketjenblack* EC) to reduce its electrical resistance. Carbon additions were made to give a resistance of 1 x $10^5$ ohms/square for a surface of dried adhesive.

The properties of the laminates of these two examples are tabulated below.  The table also includes comparison with alternative films and barrier materials used conventionally but not according to the invention.

(a)  Electrostatic Results

(Measured at temperature 22°C.  Relative Humidity 43 per cent) The aluminium layer was earthed in each Example

| Material (a) | Surface Resistivity ohm/square (b) | Charge Transfer nC (c) | Comments (d) |
|---|---|---|---|
| Control 1 Melinex* S heterofilm (polyester) | 1.25x$10^{13}$@100V | 52-390 | Hazardous in gasoline/air environment |
| Control 2 Melinex*S laminated to Melinex*S | 1x$10^{13}$ @100V | 390 | Hazardous in gasoline/air environment |

*Registered Trade Mark

| (a) | (b) | (c) | (d) |
|---|---|---|---|
| Example 1 <br> Melinex *S <br> Polyester <br> Scrim <br> Aluminised <br> Melinex*S | $1 \times 10^{4}$ @ 100V | O | Charge transfer values suggest elimination of any incendive discharge from the film surface surface |
| Example 2 <br> Melinex*S <br> Polyester <br> Scrim <br> Aluminised <br> Melinex*S | $1 \times 10^{13}$ @ 100V | O | Charge transfer values suggest elimination of any incendive discharge from the film surface |

(b)  Mechanical Results

Resistance to tear.  Measured as the load (grams) to propagate a tear in a prenotched specimen;

| Material | Maximum load (g) |
|---|---|
| Melinex*S Film (Control) | 30 |
| Laminate from Example 1 | 800 |

*Registered Trade Mark

(c) <u>Gasoline Permeation Results</u>

Permeation Rate $(g/m^2/24 \text{ hrs } 20°C)$ of 100 octane motor spirit through films, laminates and conventional flexible fuel container materials.

| Material | Thick-ness Microns | wt kg/m$^2$ | Permea-tion | Comments |
|---|---|---|---|---|
| Low Density Polyethylene(c) | 40 | - | 1300 | |
| High Density Polyethylene(c) | 40 | - | 470 | |
| Saran Wrap* (c) | 25 | - | 0.9-1.2 | |
| Tedlar* 200 SG (c) | 40 | - | 0.01 | ) Best film types for vapour conserva- |
| Melinex* S (c) | 12 | - | 0.01 | ) tion |
| Reinforced Nitrile/Poly-chloroprene Rubber Fabric (c) | 3000 | 1.92 | 6.0 | Excessively heavy material which requires further thickening to match the perform-ance of the preferred films |
| Examples | 190** | 0.11 | 0.0001 | Combines low weight with exceptional |
| Laminate 1 | 48 | | | impermeability |
| Laminate 2 | as above | 0.12 | 0.0001 | As above |

*Registered Trade Mark (c) Comparative Data          ** At scrim

The laminates of the present invention are thus flexible, very light in weight and yet robust, and have the necessary antistatic properties to minimise the installation, economic and safety problems of the conventional barriers.  Furthermore, when used in storage or transporation tanks, their low permeability and their antistatic properties minimise the unnecessary discharge of obnoxious vapours into the environment.

0003402

1. An anti-static laminate comprising at least one continuous layer of an electrically conductive material formed by a metal foil or a metallised surface of a polymer film and at least one layer of a non-conducting reinforcing scrim both layers being sandwiched between two layers of polymer film, and means for earthing the electrically conductive material.

2. A container provided with an anti-static laminate comprising at least one continuous layer of an electrically conductive material formed by a metal foil or a metallised surface of a polymer film and at least one layer of a non-conducting reinforcing scrim both layers being sandwiched between two layers of polymer film, and means for earthing the electrically conductive material, the anti-static laminate being disposed within the container to divide the container into an air space and a liquid space.

3. An antistatic laminate according to claim 1 or 2 wherein the polymer film is formed from a polymer selected from polyesters, polyamides, polyurethanes, polyvinyl fluoride, polyvinyl chloride, polyvinylidene chloride, polyethylene, fluorinated polyethylene and polypropylene.

4. An anti-static laminate according to any of the preceding claims wherein the metal in the layer of electrically conducting material is an oxidation resistant metal of high conductivity selected from copper, aluminium, silver, gold, palladium and nickel.

5. An antistatic laminate according to claim 4 wherein the layer of electrically conducting material is an aluminised surface of a polyester film.

6.  An antistatic laminate according to any of the preceding claims wherein one of the laminating polymer films is the polymer film having the metallised surface.

7.  An antistatic laminate according to any of the preceding claims wherein the layers of polymer film, electrically conductive material and the non-conductive scrim are bonded with an adhesive filled with conducting material.

8.  An antistatic laminate according to any of the preceding claims wherein the earthing means is a strip of metallised polymer or a metal foil adhered to the conductive material by a conducting adhesive.

9.  An antistatic laminate according to any of the preceding claims wherein the polymer films in the laminate have a thickness between 10 and 50 microns.

10. An antistatic laminate according to any of the preceding claims wherein the overall thickness of the laminate is between 100 and 400 microns.

0003402

European Patent Office

**EUROPEAN SEARCH REPORT**

Application number

EP 79 30 0065

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | B 32 B 15/08 <br> B 65 D 87/18 |
| | <u>US - A - 3 572 499</u> (R.L. MONDANO) <br> * Claims 1,2,4,5,7; column 1, line 34 - column 3, line 7; figures 1-3 * <br> -- <br> <u>US - A - 3 816 230</u> (E.J. CARRERAS) <br> * Claims 1,2; column 2, lines 4-67; figure 2 * <br> -- <br> <u>US - A - 3 864 468</u> (S. HYMAN et al) <br> * Claims 1,3,5; column 3, lines 18-28; column 3, line 65 - column 5, line 21; examples 4, 69,98 * <br> -- | 1,3,4, 6-8 <br><br><br> 1,3,4, 7 <br><br><br> 1,3 | |
| A | <u>US - A - 3 028 040</u> (H.W. WOODARD et al.) <br> * Claim 1; column 2, line 44 - column 3, line 22; column 8, lines 42-57 * <br> -- | 1,3 | |
| D,A <br> P | <u>US - A - 4 079 856</u> (P.H. DRAKE) <br> * Claim 1; column 2, lines 3-54 * <br> ---- | 1 | |

TECHNICAL FIELDS SEARCHED (Int.Cl.²)

B 32 B
B 65 D 87/18
        87/48

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-04-1979 | BLASBAND |

EPO Form 1503.1  06.78